# EUROPEAN PATENT APPLICATION

(11) **EP 2 372 641 A2**
(43) Date of publication of application: **05.10.2011**
(21) Application number: 11001183.0
(22) Date of filing: 14.02.2011
(51) Int. Cl.: G06T 7/00

(54) **Surface detection in images based on spatial data**

(30) Priority: 17.02.2010 US 706990
(71) Applicant: Harris Corporation, Melbourne FL 32919 (US)
(72) Inventor: Minear, Kathleen, Palm Bay, FL 32905 (US); O'Neil Smith, Antony, Melbourne, FL 32940 (US)
(74) Representative: Schmidt, Steffen

(57) **Abstract**

A system and method are provided for detecting surfaces in image data based on spatial data. The method includes obtaining an empirical probability density function (PDF) for the spatial data, where the spatial data includes a plurality of three-dimensional (3-D) point cloud data points associated with a plurality of default color space values. The method also includes generating a globally smooth estimated PDF based on the empirical PDF and a kernel smoothing technique, ascertaining one or more threshold elevation values for at least one mode in the estimated PDF, and tagging one or more portions of plurality of 3-D point cloud data points corresponding to the at least one mode based on the threshold elevation values.

## Description

### BACKGROUND OF THE INVENTION

### Statement of the Technical Field

The present invention relates to analysis of image data, and more particularly systems and methods for detection of surfaces in image data using spatial data.

### Description of the Related Art

Three-dimensional (3-D) type sensing systems are commonly used to generate 3-D images of a location for use in various applications. For example, such 3-D images are used for creating a safe training or planning environment for military operations or civilian activities, for generating topographical maps, or for surveillance of a location. Such sensing systems typically operate by capturing elevation data associated with the location. One example of a 3-D type sensing system is a Light Detection And Ranging (LIDAR) system. LIDAR type 3-D sensing systems generate data by recording multiple range echoes from a single pulse of laser light to generate a frame sometimes called image frame. Accordingly, each image frame of LIDAR data will be comprised of a collection of points in three dimensions (3-D point cloud) which correspond to the multiple range echoes within sensor aperture. These points can be organized into "voxels" which represent values on a regular grid in a three dimensional space. Voxels used in 3-D imaging are analogous to pixels used in the context of 2D imaging devices. These frames can be processed to reconstruct a 3-D image of the location. In this regard, it should be understood that each point in the 3-D point cloud has an individual x, y and z value, representing the actual surface within the scene in 3-D.

To further assist interpretation of the 3-D point cloud, color values have been used to enhance visualization of the point cloud data. That is, for each point in a 3-D point cloud, a color is selected in accordance with a predefined variable, such as altitude. Accordingly, the variations in color are generally used to identify points at different heights or at altitudes above ground level. Notwithstanding the use of such conventional color maps, 3-D point cloud data has remained difficult to interpret.

### SUMMARY OF THE INVENTION

Embodiments of the invention concern systems and methods for detecting surfaces in images based on spatial data. In a first embodiment of the invention, a method for detecting surfaces in image data based on spatial data is provided. The method includes the step of obtaining an empirical probability density function (PDF) for the spatial data, where the spatial data includes a plurality of three-dimensional (3-D) point cloud data points associated with a plurality of default color space values. The method also includes the steps of generating a globally smooth estimated PDF based on the empirical PDF and a kernel smoothing technique, and ascertaining one or more threshold elevation values for at least one mode in the estimated PDF. The method further includes the step of tagging one or more portions of the plurality of 3-D point cloud data points corresponding to the at least one mode based on the threshold elevation values.

In a second embodiment of the invention, a system for detecting surfaces in image data based on spatial data is provided. The system includes a storage element for receiving the spatial data representing one or more surfaces of objects in a scene. In the system the spatial data includes a plurality of three-dimensional (3-D) point cloud data points associated with one or more default color space values. The system also includes a processing element communicatively coupled to the storage element. In the system, the processing element is configured for obtaining an empirical probability density function (PDF) based on the spatial data and for generating a globally smooth estimated PDF based on the empirical PDF and a kernel smoothing technique. The processing element is also configured for ascertaining one or more threshold elevation values for at least one mode in the estimated PDF and tagging one or more portions of the spatial data corresponding to the at least one mode based on the threshold elevation values. The processing element is further configured for modifying at least a portion of the default color space values based on the tagging for use in generating a display of the surfaces using the spatial data.

### BRIEF DESCRIPTION OF THE DRAWINGS

FIG. 1 shows an exemplary data collection system for collecting spatial data comprising 3-D point cloud data and associated radiometric image data according to an embodiment of the invention.

FIG. 2 is exemplary image frame containing 3-D point cloud data acquired in accordance with an embodiment of the present invention.

FIG. 3 shows an exemplary method for tagging and optionally displaying image data in accordance with an embodiment of the invention.

FIG. 4 is a top-down radiometric image of a geographic location.

FIG. 5 is a perspective view of 3-D point cloud for a volume associated with the geographic location in FIG. 4.

FIGs. 6A and 6B are a top-down view and a perspective view, respectively, of the 3-D point cloud in FIG. 5 associated with the geographic location in FIG. 4 after colorization.

FIG. 7 shows a close-up view of a portion of the image in FIG. 4.

FIG. 8 shows a histogram of elevation versus the number of observations for a portion of the image of FIG. 7.

FIG. 9A is an x-y plot of an estimated PDF for the empirical PDF shown in FIG. 8 generated using a Gaussian kernel function with a standard deviation of 0.01.

FIGs. 9B and 9C are close-up views of sections of FIG. 9A.

FIG. 9D is an x-y plot of a derivative PDF for the estimated PDF shown in FIG. 9A.

FIG. 10A is an x-y plot of an estimated PDF for the empirical PDF shown in FIG. 8 generated using a Gaussian kernel function with a standard deviation of 0.5 FIGS.

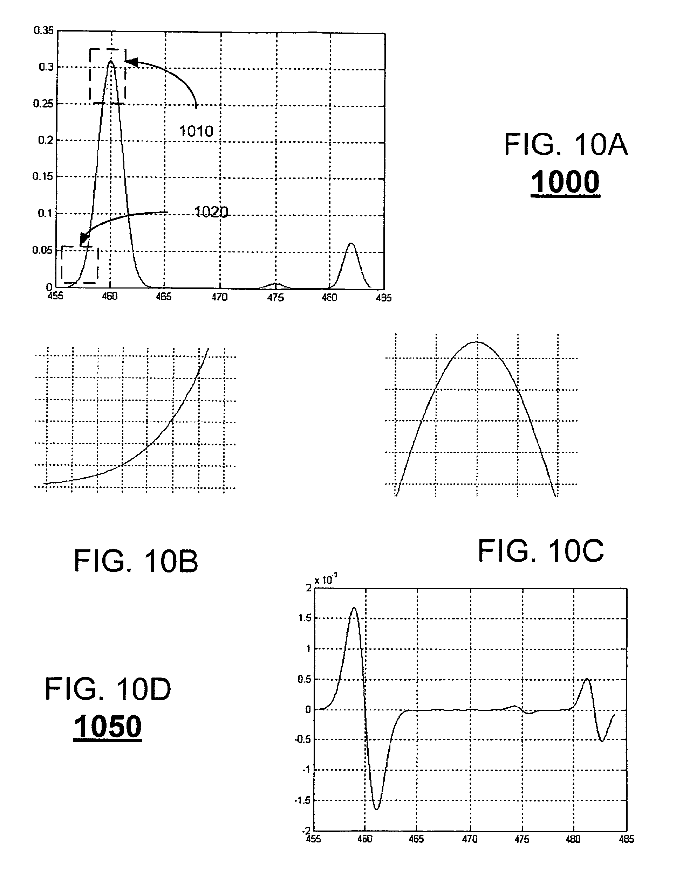

10B and 10C are close-up views of sections of FIG. 10A.

FIG. 10D is an x-y plot of a derivative PDF for the estimated PDF shown in FIG. 10A.

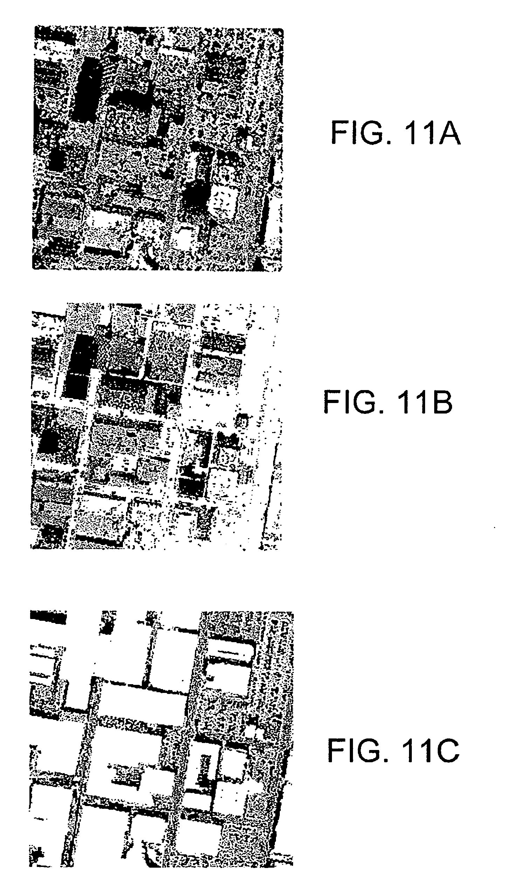

FIG. 11A is a top-down view of spatial data of a location including color values from a radiometric image of the location.

FIGs. 11B and 11C present alternate versions of FIG. 11A modified in accordance with an embodiment of the invention.

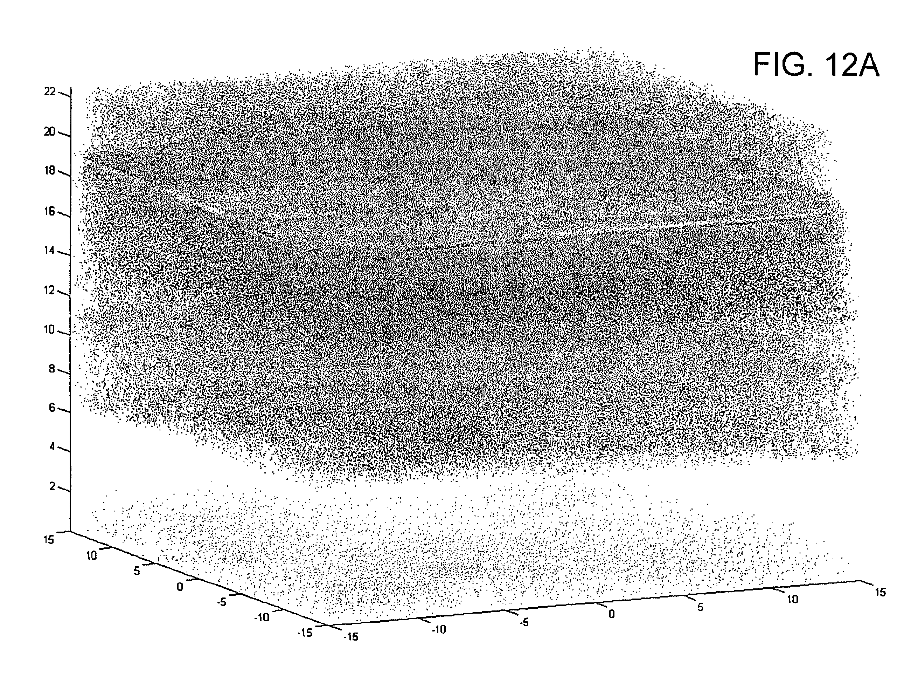

FIG. 12A is a perspective view of an image comprising relative spatial data of a ocean volume in which alternate color values are applied to an ocean surface elevation and a ocean floor elevation.

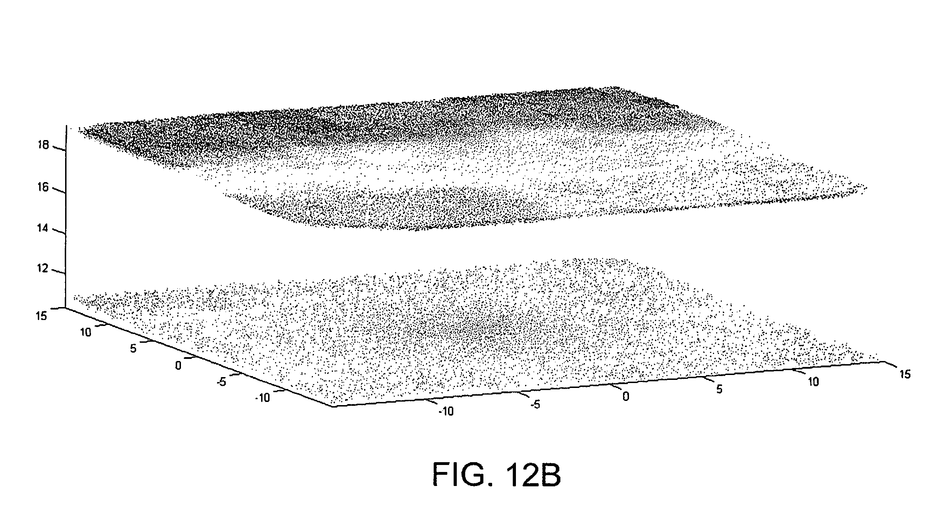

FIG. 12B is a perspective view of the image of FIG 12A in which data points not associated with the tagged portions of the spatial data have been removed.

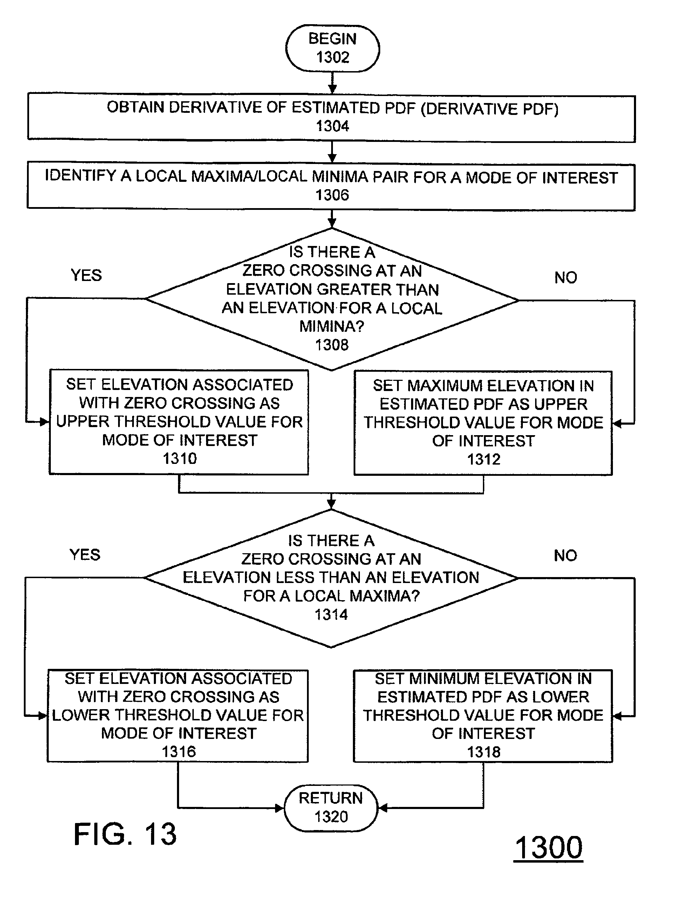

FIG. 13 is a flowchart of steps in an exemplary method 1300 for identifying threshold elevation values in an empirical PDF for a mode of interest in accordance with an embodiment of the invention.

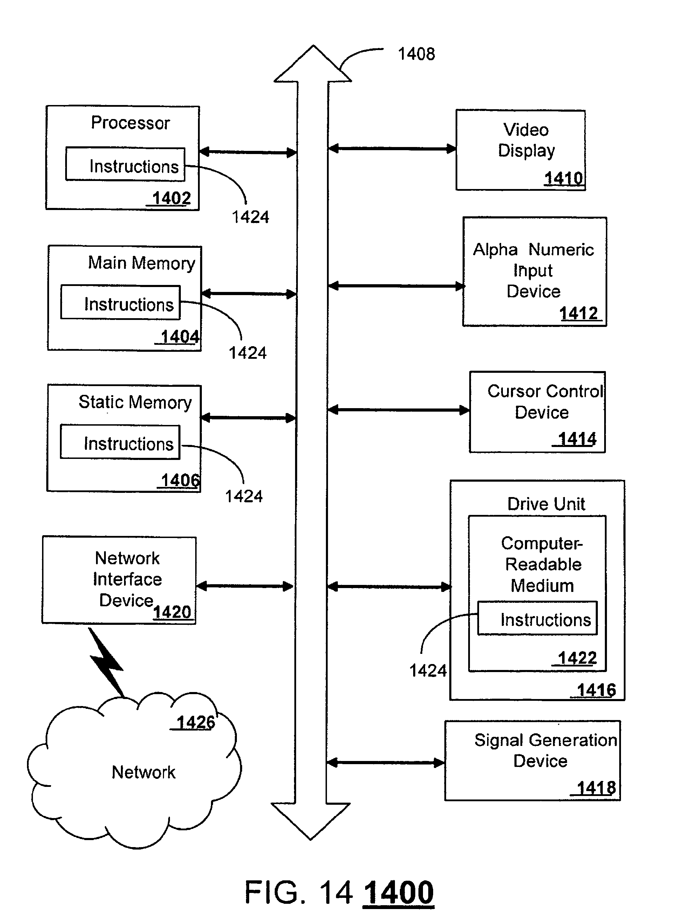

FIG. 14 is a schematic diagram of a computer system for executing a set of instructions that, when executed, can cause the computer system to perform one or more of the methodologies and procedures described herein.

### DETAILED DESCRIPTION

The present invention is described with reference to the attached figures, wherein like reference numerals are used throughout the figures to designate similar or equivalent elements. The figures are not drawn to scale and they are provided merely to illustrate some embodiments of the present invention. Several aspects of the invention are described below with reference to example applications for illustration. It should be understood that numerous specific details, relationships, and methods are set forth to provide a full understanding of the invention. One having ordinary skill in the relevant art, however, will readily recognize that the invention can be practiced without one or more of the specific details or with other methods. In other instances, well-known structures or operations are not shown in detail to avoid obscuring the invention. The present invention is not limited by the illustrated ordering of acts or events, as some acts may occur in different orders and/or concurrently with other acts or events. Furthermore, not all illustrated acts or events are required to implement a methodology in accordance with the present invention.

As described above, the use of spatial data is prevalent in military and civilian applications for analyzing locations or performing surveillance. Such spatial data is typically generated using a 3-D imaging system which generates one or more frames of 3-D point cloud data. One example of such a 3-D imaging system is a conventional LIDAR imaging system, as described above. In general, such LIDAR systems use a high-energy laser, optical detector, and timing circuitry to determine the distance to a target. In a conventional LIDAR system, one or more laser pulses are used to illuminate a scene. Each pulse triggers a timing circuit that operates in conjunction with the detector array. In general, the system measures the time for each pixel of a pulse of light to transit a round-trip path from the laser to the target and back to the detector array. The reflected light from a target is detected in the detector array and its round-trip travel time is measured to determine the distance to a point on the target. The calculated range or distance information is obtained for a multitude of points comprising the target, thereby creating a 3-D point cloud. The 3-D point cloud can be used to render the 3-D shape of an object.

In general, interpreting 3-D point cloud data to identify objects and surfaces in a scene can be difficult without employing substantially complex three dimensional analyses of the 3-D point cloud. Therefore, to facilitate interpretation of 3-D point cloud data, some conventional systems associate color values with each of the points in the 3-D point cloud. The term "color value", as used herein, refers to the set of one or more values (i.e., tuples of numbers) used to define a point from any type of color map or space, such as a point in a red-green-blue (RGB) color space, hue, saturation and intensity (HSI) color space, or a point in a intensity (grayscale) color space, to name a few. In some cases, the associated color values provide an artificial coloring or shading of the 3-D point cloud data based on assumptions regarding the terrain or the types of objects in the scene to assist the observer's interpretation of the 3-D point cloud. In other cases, the associated color values for the 3-D point cloud data can be based on a radiometric image. The term "radiometric image", as used herein, refers to a two-dimensional representation (an image) of a location obtained by using one or more sensors or detectors operating on one or more electromagnetic wavelengths. In particular, the color values from the radiometric image are applied to the 3-D point cloud data based on a registration or alignment operation.

Although the combination of spatial data and color values described above assist the observer in interpreting 3-D point cloud data, there are many circumstances in which associating color values with spatial data provides little or no assistance to the observer during interpretation of image data. For example, if the color values for an object and an adjacent surface or object are not sufficiently different, the addition of color values will not aid interpretation of the image data. Similarly, if the color values for different surfaces or layers in a volume are not sufficiently different, the addition of color values will also not aid interpretation of the 3-D point cloud data. In yet another example, if the color values for different portions of a single surface or layer vary significantly over a geographic area, it can be difficult for an observer to conclude that the different portions belong to the same surface.

Therefore, to overcome the limitations of conventional methods, the various embodiments of the invention provide systems and methods for improving visualization and interpretation of image data based on spatial data consisting of 3-D point cloud data. In particular, the various embodiments of the invention provide a system and method for tagging portions of spatial data associated with a selected surface, a selected layer, selected elevation, and/or any associated objects. In the various embodiments of the invention, such tagging can be performed without the need for complex 3-D analyses of 3-D point cloud data. Rather, statistical methods are used to analyze the distribution of the elevation values in the 3-D point cloud data in order to identify and tag surfaces in the 3-D point cloud data. The tagging can then be used to provide alternate color values to produce modified radiometric images, modified 3-D point cloud images, or combinations thereof. The inclusion of these alternate color values therefore results in an image in which a selected surface, a selected layer, selected elevation, and/or any associated objects can be more easily discerned by the observer. Additionally, the tagging can be used to remove image data associated with noise, artifacts, or other features on little or no interest to the observer.

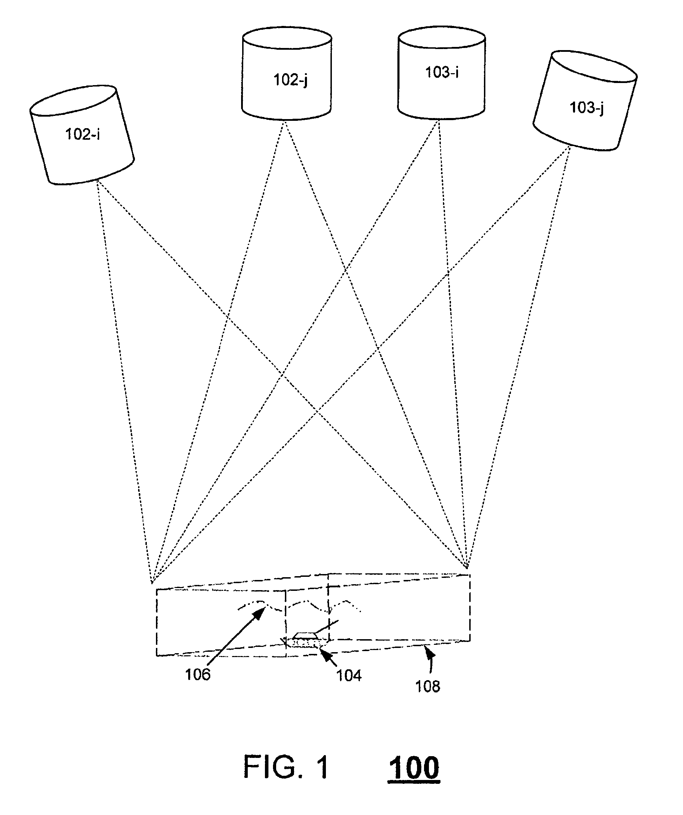

As described above, one aspect of the invention is to perform tagging of spatial data of a location in order to modify color values from an associated radiometric image. In the various embodiments of the invention, the spatial data and associated radiometric images can be collected in several ways. One method is shown in FIG. 1.

FIG. 1 shows an exemplary data collection system 100 for collecting spatial data comprising 3-D point cloud data and associated radiometric image data according to an embodiment of the invention. As shown in FIG. 1, a volume 108 to be imaged can contain one or more objects 104, 106, such as trees, vehicles, and buildings.

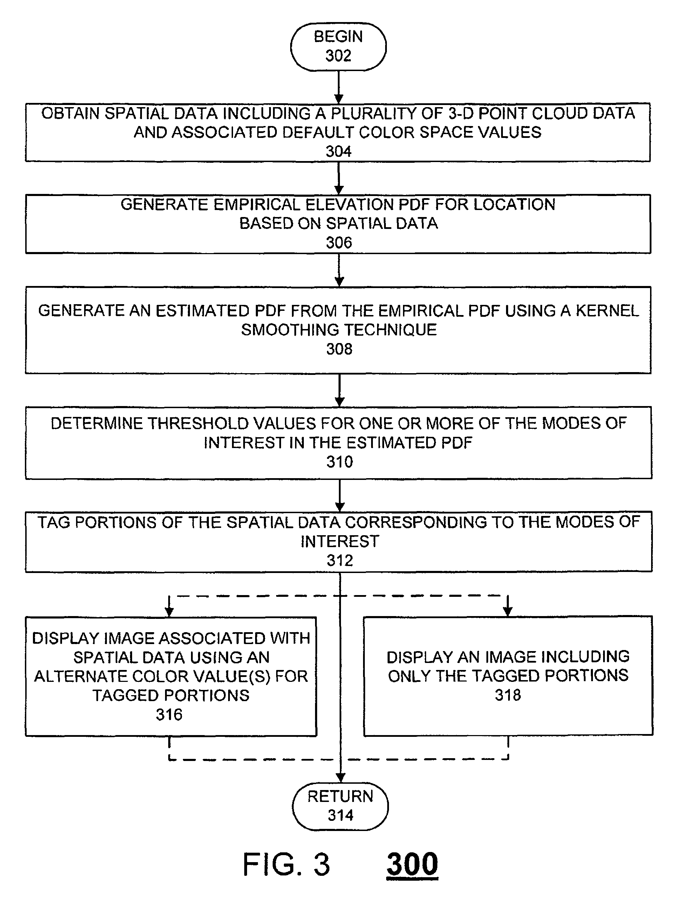

In the various embodiments of the inventions, the volume 108 is imaged using one or more sensors. As shown in FIG. 1, 3-D point cloud data can be collected using one or more sensors 102-i, 102-j and the data for an associated radiometric image can be collected using one or more radiometric image sensors 103-i, 103-j. The sensors 102-i, 102-j, 103-i, and 103-j can be any remotely positioned sensor or imaging devices. For example, the sensors 102-i, 102-j, 103-i, and 103-j can be positioned to operate on, by way of example and not limitation, an elevated viewing structure, an aircraft, a spacecraft, or a celestial object. That is, the remote data is acquired from any position, fixed or mobile, in view of the volume 108 being imaged. Furthermore, although sensors 102-i, 102-j, 103-i, and 103-j are shown as separate imaging systems, two or more of sensors 102-i, 102-j, 103-i, and 103-j can be combined into a single imaging system. Additionally, a single sensor can be configured to obtain the data at two or more different poses. For example, a single sensor on an aircraft or spacecraft can be configured to obtain image data as it moves over a geographic area including volume 108.

In some instances, the line of sight between sensors 102-i and 102-j and an object 104 may be partly obscured by another object (occluding object) 106. In the case of a LIDAR system, the occluding object 106 can comprise natural materials, such as foliage from trees, or man made materials, such as camouflage netting. It should be appreciated that in many instances, the occluding object 106 will be somewhat porous in nature. Consequently, the sensors 102-i, 102-j will be able to detect fragments of object 104 which are visible through the porous areas of the occluding object 106. The fragments of the object 104 that are visible through such porous areas will vary depending on the particular location of the sensor.

By collecting data from several poses, such as at sensors 102-i and 102-j, an aggregation of 3-D point cloud data can be obtained. Typically, aggregation of the data occurs by means of a registration process. The registration process combines the data from two or more frames by correcting for variations between frames with regard to sensor rotation and position so that the data can be combined in a meaningful way. As will be appreciated by those skilled in the art, there are several different techniques that can be used to register this data. Subsequent to such registration, the aggregated 3-D point cloud data from two or more frames can be analyzed to improve identification of an object 104 obscured by an occluding object 106. However, the embodiments of the present invention are not limited solely to aggregated data. That is, the 3-D point cloud data can be generated using multiple image frames or a single image frame.

In the various embodiments of the present invention, the radiometric image data collected by sensors 103-i and 103-j can include intensity data for an image acquired from various radiometric sensors, each associated with a particular range of wavelengths (i.e., a spectral band). Therefore, in the various embodiments of the present invention, the radiometric image data can include multi-spectral (∼4 bands), hyper-spectral (>100 bands), and/or panchromatic (single band) image data. Additionally, these bands can include wavelengths that are visible or invisible to the human eye.

As described above, the data points in the 3-D point cloud data can be associated with different color values. In some embodiments of the invention, the color values selected can be based on a predefined mapping. In such embodiments, a mapping function can be provided that associates a color value with a particular elevation. Therefore, a color value for each data point in the 3-D point cloud data can be calculated using the mapping function. In other embodiments of the invention, the 3-D point cloud data can be fused or aggregated with single or multi-band radiometric images to obtain color values. That is, a data point is in the 3-D point cloud data is associated with a portion of the single or multi-band radiometric images. A color value is then selected based on the associated portion of the single or multi-band radiometric images. The aggregation or fusion can be based on meta-data associated with the 3-D point cloud data and the radiometric image data. In such embodiments, the meta-data can include information suitable for facilitating the registration process, including any additional information regarding the sensor or the location being imaged. By way of example and not limitation, the meta-data includes information identifying a date and/or a time of image acquisition, information identifying the geographic location being imaged, or information specifying a location of the sensor. For example, information indentifying the geographic location being image can include geographic coordinates for the four corners of a rectangular image can be provided in the meta-data.

Although, some embodiments of the invention will generally be described in terms of one set of 3-D point cloud data for a location being combined with a corresponding set of one radiometric image data associated with the same volume, the present invention is not limited in this regard. In the various embodiments of the present invention, any number of sets of 3-D point cloud data and any number of radiometric image data sets can be combined. For example, mosaics of 3-D point cloud data and/or radiometric image data can be used in the various embodiments of the invention.

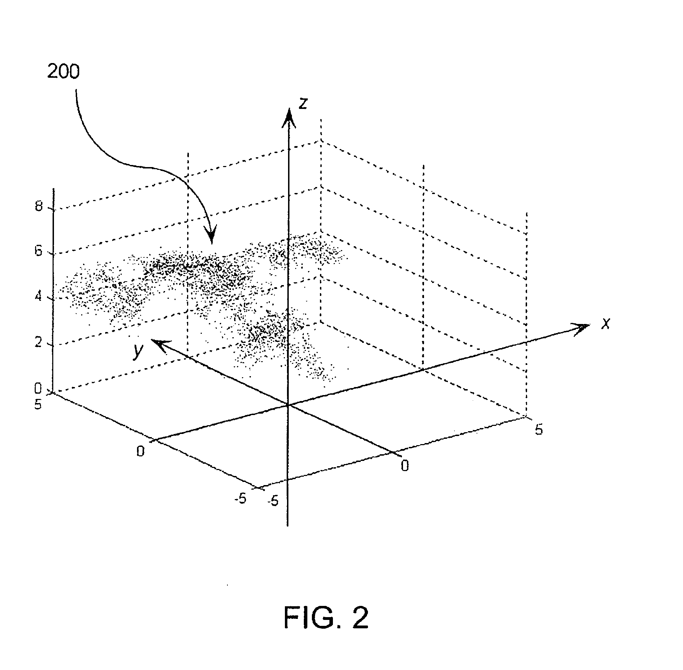

FIG. 2 is exemplary image frame containing 3-D point cloud data 200 acquired in accordance with an embodiment of the present invention. In some embodiments of the present invention, the 3-D point cloud data 200 can be aggregated from two or more frames of such 3-D point cloud data obtained by sensors 102-i, 102-j at different poses, as shown in FIG. 1, and registered using a suitable registration process. As such, the 3-D point cloud data 200 defines the location of a set of data points in a volume, each of which can be defined in a three-dimensional space by a location on an x, y, and z axis. The measurements performed by the sensors 102-i, 102-j and any subsequent registration processes (if aggregation is used) are used to define the x, y, z location of each data point. That is, each data point is associated with a geographic location and an elevation.

FIG. 3 shows an exemplary method 300 for tagging and optionally displaying image data in accordance with an embodiment of the invention. It should be noted that the various embodiments are not limited the steps described in method 300. Rather, a method for tagging data in accordance with an embodiment of the invention can include more or less steps than those described in method 300.

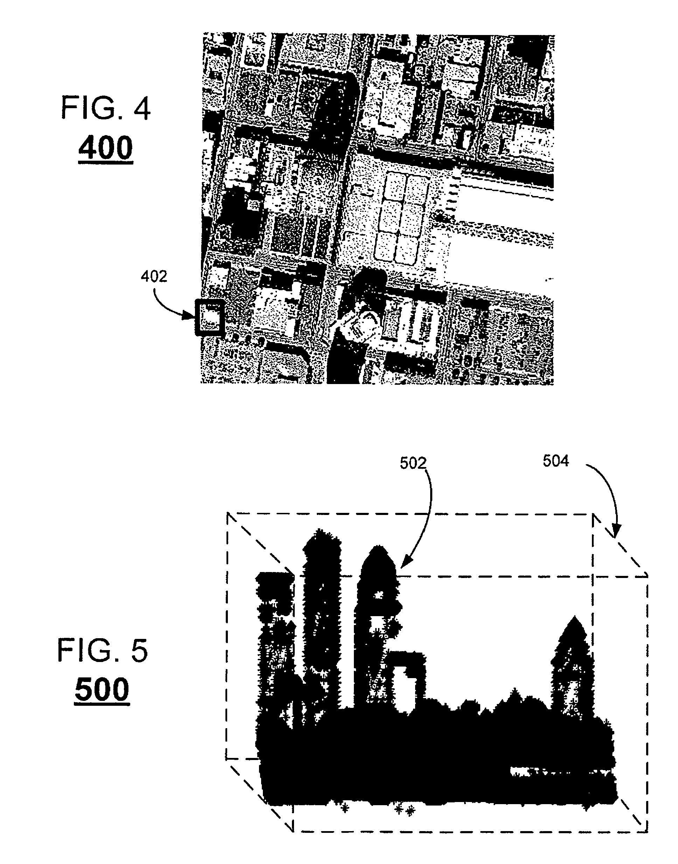

The method 300 begins at block 302 and continues to block 304. At block 304, spatial data for a volume is obtained. As described above, the spatial data includes data points for a 3-D point cloud data. Additionally, the spatial data obtained at block 304 is associated with default color values. In the various embodiments of the invention, default color values can be provided for spatial data in a variety of ways. For example, in one exemplary embodiment, default color values can be obtained from one or more radiometric images associated with the 3-D point cloud data. This method of obtaining default color values is conceptually illustrated with respect to FIGs. 4, 5, 6A, and 6B.

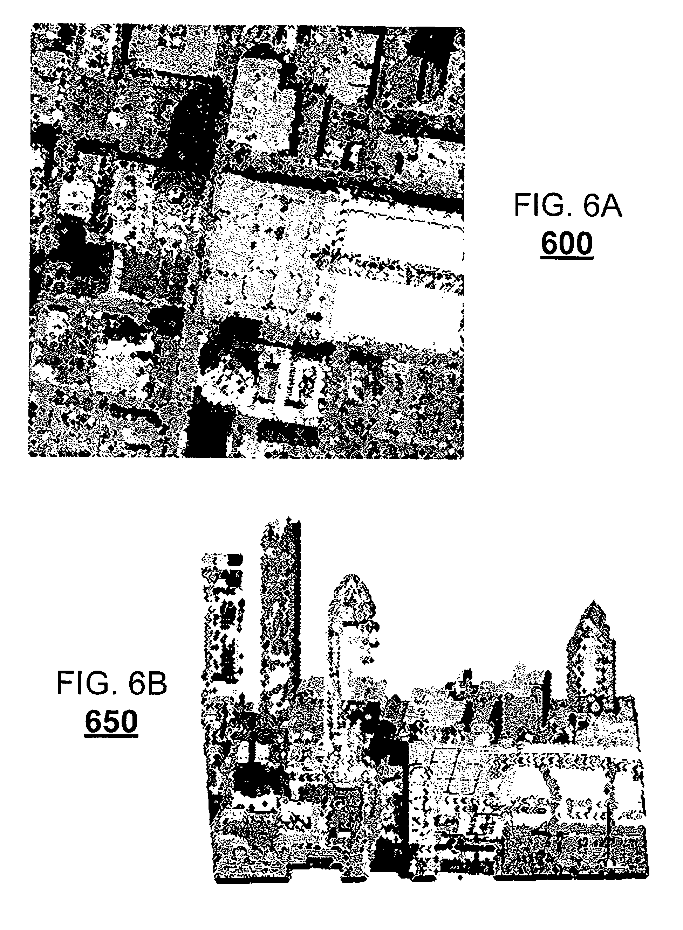

FIG. 4 is a top-down radiometric image 400 of a geographic location. In FIG. 4, each pixel of image 400 has a color value associated with a different portion of the geographic location imaged. FIG. 5 is a perspective view 500 of 3-D point cloud 502 for a volume 504 associated with the geographic location in FIG. 4. As described above, the various pixels in image 400 and the data points in 3-D point cloud 502 can be registered to align each of the data points in point cloud 502 with the pixels in image 400. Based on this alignment, color values can be selected for the various data points in point cloud 502. An exemplary result of this combination is shown in FIGs. 6A and 6B. FIGs. 6A and 6B are a top-down view 600 and a perspective view 650, respectively, of the 3-D point cloud in FIG. 5 associated with the geographic location in FIG. 4 after colorization. As shown in FIGs. 6A and 6B, each of data points in the 3-D point cloud is associated with a color value from a corresponding pixel in FIG. 4.

However, the various embodiments of the invention are not limited to this method of providing default color values. In another exemplary embodiment, a same default color value can be provided for all data points in a 3-D point cloud. In yet another exemplary embodiment, a mapping function, as described above, can be used to generate the default color values for a 3-D point cloud using, for example, elevation data. Any other method for associating default color values with spatial data can also be used in the various embodiments of the invention.

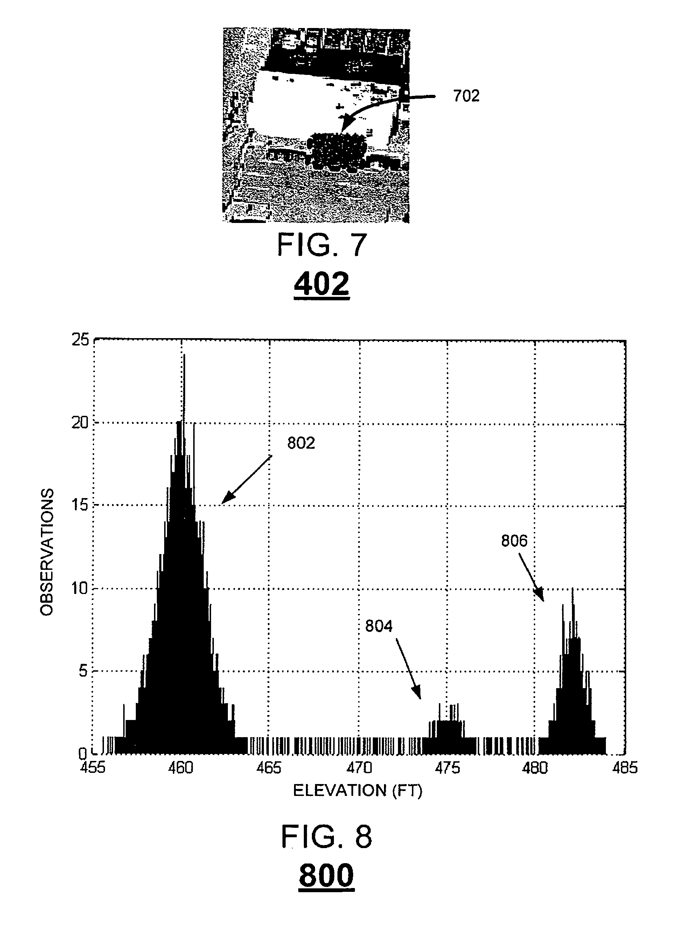

Referring back to FIG. 3, after the spatial data is obtained at block 304, an empirical elevation probability density function (PDF) can be obtained at block 306 based on one or more portions of the spatial data. As used herein, the term "empirical elevation PDF" refers to a graphical or tabular representation of the frequency of elevation values in the 3-D point cloud data. In some embodiments of the invention, the empirical PDF can be a representation of the actual frequency of elevation values in the 3-D point cloud data. That is, the empirical PDF can show the actual number of elevation values falling into each one of plurality of elevation value ranges, i.e., a histogram of the elevation values in the 3-D point cloud data. Such an empirical PDF (i.e., histogram) for 3-D point cloud data illustrated below is provided with respect to FIGs. 7 and 8.

It is worth noting that in other embodiments of the invention, the empirical PDF can alternatively be a representation of the relative frequency of elevation values in the 3-D point cloud data. That is, the empirical PDF can show the fraction or proportion of elevation values falling into each one of a plurality of elevation value ranges.

FIG. 7 shows a close-up view of portion 402 of image 400 in FIG. 4. FIG. 8 shows a histogram 800 of elevation versus the number of observations in portion 702 of FIG. 7. As shown in FIG. 7, portion 702 includes a car, a portion of a nearby building, and a portion of the ground below the car and the building. Since the car, the building, and the ground are associated with different elevations, the resulting PDF will exhibit a mode for each of these objects or surface. As used herein with respect to a PDF, the term "mode" refers to the sub-distribution of 3-D point cloud data points associated with each peak observed in a PDF. This is shown in FIG. 8 as three sub-distributions within histogram 800. The first sub-distribution 802, centered at about 460 feet, is associated with the data points of the 3-D point cloud that are likely associated with the ground in area 702. The second sub-distribution 804, centered at about 475 feet, is associated with the data points of the 3-D point cloud that are likely associated with the car in area 702. The third sub-distribution 806, centered at about 482 feet, is associated with the data points of the 3-D point cloud that are likely associated with the height of the building in area 702.

Referring back to FIG. 3, once the empirical PDF has been generated at block 306, identification of the various modes and the threshold elevation values indicating the range of elevations associated with the various modes can begin at block 308. At block 308, a globally smooth, estimated PDF for the empirical PDF can be obtained. That is, a curve or mathematical function is obtained that approximates the overall shape of the empirical PDF while excluding noise and other small-scale structure in the empirical PDF. Afterwards, threshold elevation values for one or more of the modes in the estimated PDF can be determined at block 310, where the threshold elevation values represent the maximum and/or minimum elevations associated with each mode of interest.

Although the empirical PDF obtained at block 306 permits identification of the various modes present in the spatial data, the range of elevations (i.e., the threshold elevation values) associated with each of the modes are typically not readily discernable from the empirical PDF. In particular, the noise typically observed in empirical PDF's, such as that observed in FIG. 8, makes it difficult to discern the range of data points associated with a particular mode. One solution to this problem is to determine separate analytical expressions for each of the sub-distributions associated with each of the modes in the empirical PDF. These expressions can then be used to determine the maximum and minimum elevation values associated with each sub-distribution. For example, In FIG. 8, a Gaussian distribution could be selected to model each of sub-distributions 802, 804, and 806 and threshold elevation values could be based a characteristic of the selected Gaussian distributions, such a multiple of the standard deviation.

Unfortunately, separate analysis of each mode is generally problematic with regards to identification of different surfaces in a single image. First, obtaining separate analytic expressions that accurately match the sub-distributions can be difficult in some instances. For example, if modes have overlapping distributions, the observed distributions are the result of a combination of distributions. Therefore, it can be difficult to ascertain whether particular data points are associated with the first or the second overlapping modes. As a result, some portions of a surface may be incorrectly identified. Second, identification of modes is non-trivial in certain instances. For example, in the case of a surface with varying surface terrain, the elevation data points associated with different portions may result in a series of different sub-distributions. Accordingly, portions of an image associated with a same surface may be incorrectly identified as parts of different surfaces. Third, even if separate analytical expressions can be obtained for overlapping modes, a threshold elevation value obtained from a characteristic of the expression, such as the standard deviation of a Gaussian distribution, may correspond to an elevation in a distribution of an overlapping mode. Accordingly, portions of an image may be incorrectly associated a surface.

In view of the limitations of evaluating the observed sub-distributions of the empirical PDF individually with respect to identifying surfaces in an image, one aspect of the invention provides for determining a single estimated PDF for the multi-mode empirical PDF. In particular, the various of the invention provide for generating an estimated PDF using a kernel smoothing technique. A kernel smoothing technique is statistical technique for estimating a real valued function f(x) by using noisy observations, when no parametric model for this function is known. In general, a kernel smoothing technique uses a defined set of weights at each point x to produce an estimated f(x) for a point Xₒ, where the weights for points x are decreasingly weighted according to their distance from Xₒ. The weights for each point x are typically defined using a kernel function. The advantages of such a technique are that no little or no training is generally required for the operation of the kernel smoother and that for most irregular sets of data points, including multi-mode data sets, a smooth curve can be generated that accurately represents the underlying, multi-mode function.

Accordingly, at block 308, a kernel smoothing technique can be applied to the empirical PDF to obtain the estimated PDF. As described above with respect to FIG. 8, the data for each mode appears to be distributed along a Gaussian distribution. Therefore, in embodiments of the invention where the modes appear to be distrbuted according to a Gaussian distribution, the kernel function selected for performing the kernel smoothing technique can be a Gaussian function. However, the various embodiments of the invention are not limited in this regard and any other kernel functions can be used, including Epanechnikov or Tri-cube kernels, to name a few.

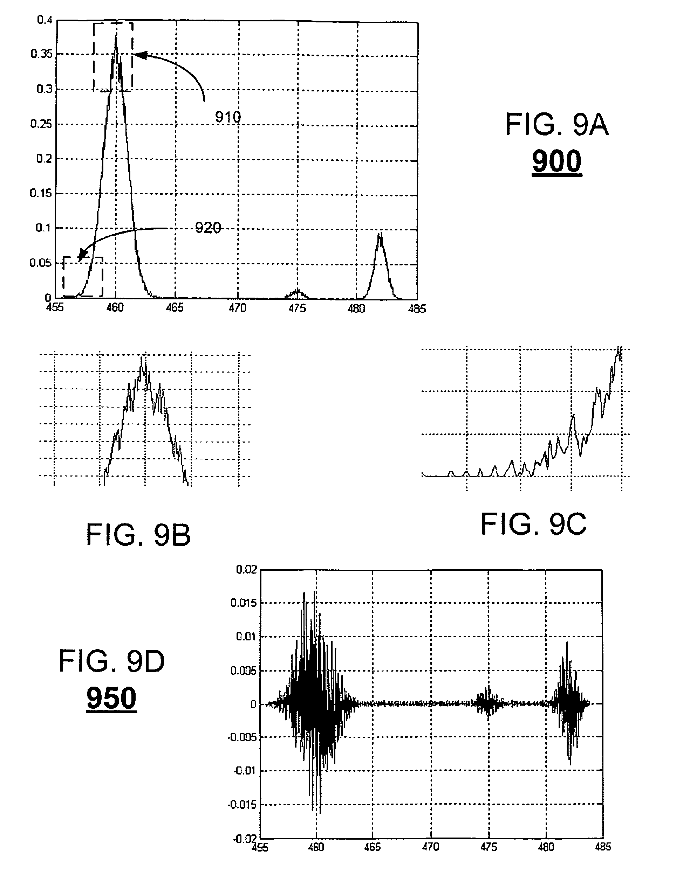

As described above, the estimated PDF obtained at block 308 is also globally smooth. As used herein with respect to a function, the term "globally smooth" refers to a function in which most, if not all, local variations have been removed. Therefore, to obtain a globally smooth, estimated PDF at block 308, the smoothing parameter for generating the estimated PDF is selected to reduce or eliminate any localized variations in the estimated PDF. That is, the variation in the estimated PDF is only the overall variation in the PDF. This is conceptually described below with respect to FIGs. 9A-9D and 10A-10D.

FIG. 9A is an x-y plot 900 of an estimated PDF for the empirical PDF shown in FIG. 8 generated using a Gaussian kernel function with a standard deviation of 0.01. As shown in FIG. 9A, the estimated PDF substantially matches the data in FIG. 8, but the estimated PDF is substantially noisy. That is, a significant amount of localized variation in observed. This is further illustrated in FIGs. 9B, 9C, and 9D. FIGs. 9B and 9C are close-up views of sections 910 and 920, respectively of plot 900. FIG. 9D is an x-y plot 950 of a derivative PDF for the estimated PDF shown in FIG. 9A.

In the various embodiments of the invention, a derivative PDF can be obtained from an estimated PDF analytically or numerically. In the case of an estimated PDF that can be expressed as an analytical function, the derivative of this analytic function can be determined and used as the derivative PDF. In the case of an estimated PDF that cannot be expressed as an analytic function, the numerical values obtained for the estimated PDF can be used to numerically compute the derivative PDF. In such embodiments of the invention, any type of numerical differentiation methods can be used. Such methods include, but are not limited to, finite difference methods, difference quadrature methods, and complex variable methods. In the case of FIG. 9D, since the estimated PDF is obtained using numerical techniques, the derivative PDF is determined numerically using a finite difference method.

As shown in FIGs. 9B and 9C, a significant amount of noise or localized variation is observed in plot 900. Furthermore, as shown in FIG. 9D, the derivative PDF shows not only the significant amount of variation in the portions of the estimated PDF associated with each mode, but also a significant amount of variation associated with elevations between the modes. However, by adjusting the smoothing parameter for the selected kernel, such localized variations can be reduced or eliminated, as shown in FIGs. 10A-10D.

FIG. 10A is an x-y plot 1000 of an estimated PDF for the empirical PDF shown in FIG. 8 generated using a Gaussian kernel function with a standard deviation of 0.5. As shown in FIG. 10A, the estimated PDF substantially matches the data in FIG. 8 and noise is effectively eliminated. That is, the localized variation observed in FIG. 9A is not observed in FIG. 10A. This is further illustrated in FIGs. 10B, 10C, and 10D. FIGs. 10B and 10C are close-up views of sections 1010 and 1020, respectively, of plot 1000. FIG. 10D is an x-y plot 1050 of a derivative PDF for the estimated PDF shown in FIG. 10A. The derivative PDF of FIG. 10D can be obtained as described above with respect to FIG. 9D. As shown in FIGs. 10B and 10C, little or no noise or localized variation is observed in plot 1000. Furthermore, as shown in FIG. 10D, the derivative PDF shows little or no localized variation in the portions of the estimated PDF associated with each mode or the portions of the estimated PDF associated with elevations between the modes.

In the various embodiments of the invention, the value for the smoothing parameter for generating the estimated PDF at block 308 can be selected in several ways. In one embodiment of the invention, the value for the smoothing parameter can be fixed to a value known to provide estimated PDFs with little or no localized variation or noise for a particular kernel function. For example, as described above with respect to FIGs. 10A-10D, a standard deviation of 0.5 can be selected for a Gaussian kernel function. In another embodiment of the invention, the smoothing parameter can be iteratively adjusted until a noise measure of the estimated PDF converges or is minimized. Similarly, the smoothing parameter can be iteratively adjusted until the values of the estimated PDF converge. However, the various embodiments of the invention are not limited to either of these methods and any other methods for selecting a value for the smoothing parameter to obtain a globally smooth estimated PDF can be used.

Once the globally smooth estimated PDF is generated at block 308, upper and/or lower threshold elevation values can be selected at block 310 for one or more modes (i.e., the surfaces in the 3-D point cloud data) based on the estimated PDF. In particular, a derivative of the estimated PDF can be used to identify threshold elevation values. An exemplary method for selecting threshold elevation values in this fashion is described below in greater detail with respect to FIG. 13. Once the threshold elevation values are selected at block 312, the threshold elevation values can be used to tag the portions of the spatial data associated with particular modes of interest. Method 300 can then proceed to block 314 and resume previous processing.

Optionally, method 300 can display an image associated with the spatial data at block 316, where the color values associated with the spatial data are modified based on the tagging at block 312. In particular, the color values associated with the tagged spatial data can be modified to provide alternate color values. Such alternate color values can be used to highlight features of an image. As a result, identification of objects and other features in an image by the observer can be enhanced. This is illustrated below with respect to FIGs. 11A-11C. FIG. 11A is a top-down view of spatial data of a location including color values from a radiometric image of the location. FIGs. 11B and 11C present alternate versions of FIG. 11A modified in accordance with an embodiment of the invention. In FIG. 11B, the portion of the spatial data tagged as being associated with a ground level (i.e., streets in FIG. 11A) has been associated with an alternate color value. In particular, a white color value. As a result, the streets in FIG. 11A can be more easily identified and differentiated from other features in the image. In FIG. 11C, the portion of the spatial data tagged is associated with a rooftop level (i.e., buildings in FIG. 11A) and has been associated with an alternate color. In particular, a white color value. As a result, the buildings in FIG. 11A can be more easily identified and differentiated from other features in the image.

Additionally, method 300 can also provide a method to generate images including only portions of the image data. For example, following tagging at block 312 and alternatively or in conjunction with block 316, method 300 can display an image at block 318 which includes only the portions of the image associated with the tagged portions of the spatial data. This can be used, for example, to remove noise and other artifacts from an image. As a result, identification of objects or surfaces of interest is enhanced. This is illustrated below with respect to FIGs. 12A and 12B. FIG. 12A is a perspective view of an image comprising relative spatial data of a ocean volume in which alternate color values are applied to an ocean surface elevation and a ocean floor elevation. As FIG. 12A shows, despite the alternate color values for the ocean surface and ocean floor at elevation values of 19 and 11, respectively, it is difficult to visually discern these surface from noise and other artifacts in the image. However, once the surfaces are tagged in accordance with an embodiment of the invention, the untagged portions can be removed to more clearly show the tagged portions. This is illustrated in FIG. 12B. FIG. 12B is a perspective view of the image of FIG 12A in which data points not associated with the tagged portions of the spatial data have been removed. As a result of removing image data associated with noise and other artifacts and objects of no interest to the observer, the observer's interpretation of the data associated with the ocean surface and ocean floor is enhanced.

Additionally, different alternate color values can be associated with each surface to further enhance the observer's interpretation of the data. In particular, alternate color values can be selected for each surface that are typically associated with the type of surface in the image. For example, in the case of FIG. 12B, a blue color could be used for the ocean surface and a brown color could be used for the ocean floor. Such colors would correspond to colors typically associated with water and ground. However, the invention is not limited in this regard and any number of color values can be used for any number of surfaces in an image.

As described above, tagging of surfaces and objects is dependent on the proper identification of the range of elevations associated with each of the modes. This identification is illustrated below with respect to FIG. 13. FIG. 13 is a flowchart of steps in an exemplary method 1300 for identifying threshold elevation values in an empirical PDF for a mode of interest in accordance with an embodiment of the invention. However, the various embodiments are not limited the steps described in method 1300. Rather, a method for identifying threshold elevation values in accordance with an embodiment of the invention can include more or less steps than those described in method 1300.

Method 1300 begins at block 1302 and continues to block 1304. At block 1304, a derivative PDF of the estimated PDF is obtained. That is, a representation of the first derivative of the estimated PDF is generated. In the various embodiments of the invention, numerical differentiation methods can be used to generate the derivative PDF from the data points of the estimated PDF. For example, methods based on interpolation, finite difference operators, or undetermined coefficients can be used in the various embodiments of the invention. However, the invention is not limited in this regard and any other numerical differentiation methods can be used.

Once the derivative PDF is obtained at block 1306, the local maxima and local minima pair for the mode of interest are identified. For example, as shown in FIG 10D, a first mode (i.e., ground) having a distribution centered at about 460 feet in the empirical PDF of FIG. 8 has a local maxima at ∼458 feet and a local minima at ∼461 feet. Since the estimated PDF is generated to provide a globally smooth estimated PDF, as described above, no other local minima or maxima are observed for each mode in the empirical PDF. Once the local minima and maxima for the mode of interest are identified at block 1306, identification of the threshold elevation values can begin.

First at blocks 1308-1312, the upper threshold elevation value can be identified. At block 1308, it is determined whether the derivative PDF has a zero crossing at an elevation greater than the elevation associated with the local minima. A "zero crossing", as used herein, refers to an elevation in the derivative PDF a value of zero. If a zero crossing at a higher elevation is found at block 1308, then this elevation is set as the upper threshold elevation value at block 1310. The existence of such a zero crossing in the derivative PDF can indicate the elevation at which the mode of interest transitions to a second overlapping mode. That is, if a mode or interest overlaps a second mode in the estimated PDF, the zero crossing corresponds to the elevation at which the portion of the estimated PDF principally influenced by the mode of interest transitions to a portion of the estimated PDF principally influenced by the second overlapping mode. The existence of such a zero crossing in the derivative PDF can also indicate a substantial separation between the mode of interest and a second mode at a higher elevation. That is, if a mode or interest does not overlap the second higher elevation mode in the estimated PDF, the zero crossing corresponds to beginning of the portion of the estimated PDF for which little or no elevation data exists.

However, if no zero crossing at a higher elevation is found at block 1308, then the maximum elevation is set as the upper threshold elevation value at block 1310. In general, if a derivative PDF does not include a zero crossing at an elevation higher than the elevation associated with the local minima of the mode of interest, this indicates that the spatial data was "clipped". That is, the spatial data associated with mode of interest is incomplete and represents only part of distribution for the mode of interest. Accordingly, the maximum elevation can be set as the upper threshold elevation value since this maximum elevation is part of the mode of interest.

Concurrently or in addition to blocks 1308-1312, a lower threshold elevation value can also be identified at blocks 1314-1318 for the mode of interest. At block 1314, it is determined whether the derivative PDF has a zero crossing at an elevation lower than the elevation associated with the local maxima of the mode of interest. If a zero crossing at a lower elevation is found at block 1314, then this elevation is set as the lower threshold elevation value at block 1316. The existence of such a zero crossing in the derivative PDF can indicate the elevation at which the mode of interest transitions to a second overlapping mode at a lower elevation, as described above with respect to block 1310. The existence of such a zero crossing in the derivative PDF can also indicate a substantial separation between the mode of interest and a second mode at a lower elevation, as described above with respect to block 1312.

However, if no zero crossing at a lower elevation is found at block 1314, then the minimum elevation is set as the lower threshold elevation value at block 1310. In general, if a derivative PDF does not include a zero crossing at an elevation lower than the elevation associated with the local maxima of the mode of interest, this indicates that the spatial data was clipped at a lower elevation. Accordingly, the minimum elevation can be set as the lower threshold elevation value since this minimum elevation is part of the mode of interest.

Once the upper and/lower threshold elevation values are selected, method 1300 proceeds to block 1320 and resumes previous processing. For example, block 1302 can be repeated for other modes in the estimated PDF or method 300 can be repeated for a new image set.

FIG. 14 is a schematic diagram of a computer system 1400 for executing a set of instructions that, when executed, can cause the computer system to perform one or more of the methodologies and procedures described above. In some embodiments, the computer system 1400 operates as a standalone device. In other embodiments, the computer system 1400 can be connected (e.g., using a network) to other computing devices. In a networked deployment, the computer system 1400 can operate in the capacity of a server or a client developer machine in server-client developer network environment, or as a peer machine in a peer-to-peer (or distributed) network environment.

The machine can comprise various types of computing systems and devices, including a server computer, a client user computer, a personal computer (PC), a tablet PC, a laptop computer, a desktop computer, a control system, a network router, switch or bridge, or any other device capable of executing a set of instructions (sequential or otherwise) that specifies actions to be taken by that device. It is to be understood that a device of the present disclosure also includes any electronic device that provides voice, video or data communication. Further, while a single computer is illustrated, the phrase "computer system" shall be understood to include any collection of computing devices that individually or jointly execute a set (or multiple sets) of instructions to perform any one or more of the methodologies discussed herein.

The computer system 1400 can include a processor 1402 (such as a central processing unit (CPU), a graphics processing unit (GPU, or both), a main memory 1404 and a static memory 1406, which communicate with each other via a bus 1408. The computer system 1400 can further include a display unit 1410, such as a video display (e.g., a liquid crystal display or LCD), a flat panel, a solid state display, or a cathode ray tube (CRT)). The computer system 1400 can include an input device 1412 (e.g., a keyboard), a cursor control device 1414 (e.g., a mouse), a disk drive unit 1416, a signal generation device 1418 (e.g., a speaker or remote control) and a network interface device 1420.

The disk drive unit 1416 can include a computer-readable storage medium 1422 on which is stored one or more sets of instructions 1424 (e.g., software code) configured to implement one or more of the methodologies, procedures, or functions described herein. The instructions 1424 can also reside, completely or at least partially, within the main memory 1404, the static memory 1406, and/or within the processor 1402 during execution thereof by the computer system 1400. The main memory 1404 and the processor 1402 also can constitute machine-readable media.

Dedicated hardware implementations including, but not limited to, application-specific integrated circuits, programmable logic arrays, and other hardware devices can likewise be constructed to implement the methods described herein. Applications that can include the apparatus and systems of various embodiments broadly include a variety of electronic and computer systems. Some embodiments implement functions in two or more specific interconnected hardware modules or devices with related control and data signals communicated between and through the modules, or as portions of an application-specific integrated circuit. Thus, the exemplary system is applicable to software, firmware, and hardware implementations.

In accordance with various embodiments of the present disclosure, the methods described herein can be stored as software programs in a computer-readable storage medium and can be configured for running on a computer processor. Furthermore, software implementations can include, but are not limited to, distributed processing, component/object distributed processing, parallel processing, virtual machine processing, which can also be constructed to implement the methods described herein.

The present disclosure contemplates a computer-readable storage medium containing instructions 1424 or that receives and executes instructions 1424 from a propagated signal so that a device connected to a network environment 1426 can send or receive voice and/or video data, and that can communicate over the network 1426 using the instructions 1424. The instructions 1424 can further be transmitted or received over a network 1426 via the network interface device 1420.

While the computer-readable storage medium 1422 is shown in an exemplary embodiment to be a single storage medium, the term "computer-readable storage medium" should be taken to include a single medium or multiple media (e.g., a centralized or distributed database, and/or associated caches and servers) that store the one or more sets of instructions. The term "computer-readable storage medium" shall also be taken to include any medium that is capable of storing, encoding or carrying a set of instructions for execution by the machine and that cause the machine to perform any one or more of the methodologies of the present disclosure.

The term "computer-readable medium" shall accordingly be taken to include, but not be limited to, solid-state memories such as a memory card or other package that houses one or more read-only (non-volatile) memories, random access memories, or other re-writable (volatile) memories; magneto-optical or optical medium such as a disk or tape; as well as carrier wave signals such as a signal embodying computer instructions in a transmission medium; and/or a digital file attachment to e-mail or other self-contained information archive or set of archives considered to be a distribution medium equivalent to a tangible storage medium. Accordingly, the disclosure is considered to include any one or more of a computer-readable medium or a distribution medium, as listed herein and to include recognized equivalents and successor media, in which the software implementations herein are stored.

Although the present specification describes components and functions implemented in the embodiments with reference to particular standards and protocols, the disclosure is not limited to such standards and protocols. Each of the standards for Internet and other packet switched network transmission (e.g., TCP/IP, UDP/IP, HTML, and HTTP) represent examples of the state of the art. Such standards are periodically superseded by faster or more efficient equivalents having essentially the same functions. Accordingly, replacement standards and protocols having the same functions are considered equivalents.

While various embodiments of the present invention have been described above, it should be understood that they have been presented by way of example only, and not limitation. Numerous changes to the disclosed embodiments can be made in accordance with the disclosure herein without departing from the spirit or scope of the invention. Thus, the breadth and scope of the present invention should not be limited by any of the above described embodiments. Rather, the scope of the invention should be defined in accordance with the following claims and their equivalents.

Although the invention has been illustrated and described with respect to one or more implementations, equivalent alterations and modifications will occur to others skilled in the art upon the reading and understanding of this specification and the annexed drawings. In addition, while a particular feature of the invention may have been disclosed with respect to only one of several implementations, such feature may be combined with one or more other features of the other implementations as may be desired and advantageous for any given or particular application.

The terminology used herein is for the purpose of describing particular embodiments only and is not intended to be limiting of the invention. As used herein, the singular forms "a", "an" and "the" are intended to include the plural forms as well, unless the context clearly indicates otherwise. Furthermore, to the extent that the terms "including", "includes", "having", "has", "with", or variants thereof are used in either the detailed description and/or the claims, such terms are intended to be inclusive in a manner similar to the term "comprising."

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

## Claims

1. A method for detecting surfaces in image data based on spatial data, comprising:
obtaining spatial data representing one or more surfaces of objects in a scene, said spatial data comprising a plurality of three-dimensional (3-D) point cloud data points;
obtaining an empirical probability density function (PDF) for said spatial data,;
generating a globally smooth estimated PDF based on said empirical PDF and a kernel smoothing technique;
ascertaining one or more threshold elevation values for at least one mode in said estimated PDF;
tagging one or more portions of said plurality of 3-D point cloud data points corresponding to said at least one mode based on said threshold elevation values; and
generating a display of said surfaces using at least a portion of said spatial data using one or more color space values, wherein at least one of said portion of said spatial data and said color space values for said portion of said spatial data are selected based on said tagging.

2. The method of claim 1, wherein said obtaining further comprises producing a histogram of elevation values for said spatial data.

3. The method of claim 1, wherein said generating further comprises selecting a kernel function for said kernel smoothing technique to comprise a Gaussian PDF.

4. The method of claim 1, wherein said ascertaining further comprises:
computing a derivative PDF based on said estimated PDF;
identifying a local maxima and a local minima pair associated with said at least one mode in said derivative PDF; and
if said derivative PDF comprises a first zero crossing at an elevation value greater than an elevation value for said local minima, selecting said first zero crossing as an upper one of said threshold elevation values.

5. The method of claim 1, wherein said plurality of 3-D point cloud data points are associated with a plurality of default color space values, and wherein said tagged portions of said plurality of 3-D point cloud data points are displayed using one or more alternate color space values associated with said at least one mode.

6. A system for detecting surfaces in image data based on spatial data, comprising:
a storage element for receiving spatial data representing one or more surfaces of objects in a scene, said spatial data comprising a plurality of three-dimensional (3-D) point cloud data points associated with one or more default color space values; and
a processing element communicatively coupled to said storage element, said processing element configured for obtaining an empirical probability density function (PDF) based on said spatial data, generating a globally smooth estimated PDF based on said empirical PDF and a kernel smoothing technique, ascertaining one or more threshold elevation values for at least one mode in said estimated PDF, tagging one or more portions of said spatial data corresponding to said at least one mode based on said threshold elevation values, and modifying at least a portion of said default color space values based on said tagging for use in generating a display of said surfaces using said spatial data.

7. The system of claim 6, wherein said processing element is further configured during said obtaining for producing a histogram of elevation values for said spatial data.

8. The system of claim 6, wherein said processing element is further configured during said generating for selecting a kernel function for said kernel smoothing technique to comprise a Gaussian PDF.

9. The system of claim 6, wherein said processing element is further configured during said generating for iteratively determining a smoothing parameter for a kernel function for said kernel smoothing technique.

10. The system of claim 6, wherein said processing element is further configured during said ascertaining for computing a derivative PDF based on said estimated PDF, identifying a local maxima and a local minima pair associated with said at least one mode in said derivative PDF, and selecting as an upper one of said threshold elevation values a first zero crossing at an elevation value greater than an elevation value for said local minima.
